# EUROPÄISCHE PATENTANMELDUNG

(11) **EP 4 524 532 A1**
(43) Veröffentlichungstag der Anmeldung: **19.03.2025**
(21) Anmeldenummer: 24199186.8
(22) Anmeldetag: 09.09.2024
(51) Int. Cl.: G01L 1/00, G01L 1/14

(54) **SENSOR, INSBESONDERE KRAFTSENSOR ODER/UND DREHMOMENTSENSOR**

(30) Priorität: 13.09.2023 LU 505087
(71) Anmelder: Delfa Systems GmbH, 66538 Neunkirchen (DE)
(72) Erfinder: HAU, Steffen, 66424 Homburg (DE); LINNEBACH, Philipp, 66557 Illingen (DE); MEIER, Dennis, 66606 St. Wendel (DE)
(74) Vertreter: Zeiner, Johannes Michael

(57) **Zusammenfassung**

Die Erfindung betrifft einen Sensor (1-1c), insbesondere einen Kraftsensor oder/und Drehmomentsensor, der ein in seinen Abmessungen durch eine auf den Sensor wirkende Kraft (F) oder/und ein auf den Sensor wirkendes Drehmoment (M) veränderbares, flächiges Sensorelement (2-2c) aufweist. Zweckmäßigerweise umfasst der Sensor (1-1c) ein verformbares Gehäuse (3-3c), in das das flächige Sensorelement (2-2c)eingebracht ist. Dadurch, dass das flächige Sensorelement in das verformbare Gehäuse eingebracht ist, wird ein erfassbarer Bereich nicht mehr nur durch eine Empfindlichkeit des Sensorelements als solchem festgelegt, sondern vorteilhaft durch eine Festigkeit und eine Geometrie des verformbaren Gehäuses.

## Beschreibung

Die Erfindung betrifft einen Sensor, insbesondere einen Kraftsensor oder/und einen Drehmomentsensor, der ein in seinen Abmessungen durch eine auf den Sensor wirkende Kraft oder/und ein auf den Sensor wirkendes Drehmoment veränderbares, flächiges Sensorelement aufweist.

Ein Kraftsensor ist ein Sensor, mit dem eine Kraft bestimmbar ist, beispielsweise anhand einer Verformung eines Sensorelements des Sensors. Es versteht sich, dass durch eine Kraftmessung auch eine Spannung bestimmbar ist.

Ein Drehmomentsensor ist ein Sensor, mit dem ein Drehmoment bestimmbar ist. Greift beispielsweise eine Kraft außermittig an einen Sensor an, wirkt ein Drehmoment auf ein Sensorelement des Sensors.

Ein flächiges Sensorelement ist ein flaches Sensorelement, dessen Dicke sehr viel kleiner ist als dessen Breite oder Länge. Das flächige Sensorelement kann in Draufsicht auf eine Seitenfläche wie eine Oberseite rund oder eckig sein.

Kraftsensoren sind aus DE 10 2015 105 004 B3, EP 0 967 468 A1, DE 10 2017 223 195 A1 und EP 3 736 541 A1 bekannt. Es versteht sich, dass Kraftsensoren außerdem zur Bestimmung von Spannungen, Verformungen und Wegmessungen verwendbar sind.

Ein piezoresistiver Sensor ist aus EP 3 770 570 A1 bekannt.

Drehmomentsensoren sind durch Benutzung bekannt. Insbesondere in der Robotik können Drehmomentsensoren zur geregelten Ansteuerung verwendet werden, was beispielsweise für Greifaufgaben von besonderer Bedeutung ist.

Der Erfindung liegt die Aufgabe zugrunde, einen Sensor der eingangs genannten Art mit einem breiten Erfassungsbereich und einem breiten Verwendungsbereich zu schaffen. Der Erfassungsbereich ist dasjenige Intervall, in dem eine Kraft oder ein Drehmoment bestimmbar, das heißt messbar, ist.

Außerdem liegt der Erfindung die Aufgabe zugrunde, einen Sensor zu schaffen, der zur gleichzeitigen Bestimmung einer Kraft und eines Drehmoments geeignet ist.

Erfindungsgemäß wird die Aufgabe dadurch gelöst, dass der Sensor ein verformbares Gehäuse umfasst, in das das flächige Sensorelement eingebracht ist.

Ein verformbares Gehäuse ist ein im unbelasteten Zustand formstabiles Gehäuse, welches sich erst bei Einwirkung einer zu messenden Kraft oder eines zu messenden Drehmoments verformt.

Vorzugsweise verformt sich das verformbare Gehäuse des Sensors bei dessen bestimmungsgemäßer Verwendung elastisch.

Dadurch, dass das flächige Sensorelement in das verformbare Gehäuse eingebracht ist, wird ein erfassbarer Bereich nicht mehr nur durch eine Empfindlichkeit des Sensorelements als solchem festgelegt, sondern vorteilhaft durch eine Festigkeit und eine Geometrie des verformbaren Gehäuses. Das verformbare Gehäuse wirkt in der Art eines Dämpfers.

Vorteilhaft ist ein Erfassungsbereich eines erfindungsgemäßen Sensors bei gleichbleibendem Sensorelement durch geeignete Wahl eines Materials, aus dem das Gehäuse besteht, sowie einer Gehäusegeometrie einstellbar.

Denkbar ist, dass das verformbare Gehäuse aus einem flexiblen Kunststoff, vorzugsweise einem Kunststoff auf Basis von Polysiloxan (Silikon), gebildet ist, oder aus einem Metall, beispielsweise einem Leichtmetall, einer Leichtmetalllegierung oder Stahl.

Es versteht sich, dass das verformbare Gehäuse das flächige Sensorelement vollständig umschließen oder bereichsweise offen sein kann.

Ein vollständig geschlossenes Gehäuse bietet vorteilhaft Schutz vor äußeren Einflüssen, beispielsweise bei einem Einsatz in einem Industriebetrieb, während ein bereichsweise offenes Gehäuse eine Leichtbauweise eines erfindungsgemäßen Sensors ermöglicht.

Zweckmäßigerweise ist das flächige Sensorelement ein kapazitives, flächiges dielektrisches Elastomersensorelement.

Ein kapazitives, flächiges dielektrisches Elastomersensorelement kann ein sogenanntes dielektrisches Folienelement sein, bei dem auf gegenüberliegenden Seiten einer elektrisch nicht leitfähigen Kunststofffolie, beispielsweise einer Silikonfolie, jeweils eine elektrisch leitfähige Schicht aufgebracht ist. Jede der beiden elektrisch leitenden Schichten bildet eine Elektrode. Ein Messsignal bei einem solchen Elastomersensorelement wird durch eine Veränderung eines Elektrodenabstands und einer Elektrodenfläche erzeugt, wobei die Elektroden in der Art von Kondensatorplatten wirken.

Die elektrisch leitfähige Schicht kann insbesondere aus Kohlenstoff, einem Elastomer, in das Kohlenstoffpartikel eingebracht sind, einem Polymer, in das metallische Partikel eingebracht sind, oder aus Poly-3,4-ethylendioxythiophen (PEDOT) bestehen.

Bei einer Krafteinwirkung auf das kapazitive, flächige dielektrische Elastomersensorelement wird die Folie in einer Folienebene ausgelenkt, wodurch die beiden Elektroden aufeinanderzubewegt werden. Dadurch ändern sich ein Abstand der beiden Elektroden und eine Elektrodenfläche, wodurch ein für einen Belastungszustand charakteristisches Messsignal erzeugt wird.

Ein kapazitives, flächiges dielektrisches Elastomersensorelement erlaubt eine Messung besonders kleiner Verschiebungen, das heißt besonders geringer Abstandsänderung von Elektroden, aus der ein Messsignal zur Bestimmung eines Belastungszustandes, das heißt einer wirkenden Kraft oder eines wirkenden Drehmoments, erzeugt wird.

Vorzugsweise weist ein kapazitives, flächiges dielektrisches Elastomersensorelement eine Dicke zwischen 10 µm und 300 µm auf, vorzugsweise zwischen 30 µm und 80 µm. Die Erfinder haben erkannt, dass ein dielektrisches Elastomersensorelement mit einer Dicke zwischen 30 µm und 80 µm besonders genaue Messergebnisse liefert und auf einfache Art und Weise herstellbar ist.

Denkbar ist, dass das in das Gehäuse eingebrachte kapazitive, flächige dielektrische Elastomersensorelement von einer zusätzlichen Schutzhülle umgeben ist.

In einer Ausgestaltung der Erfindung ist das flächige Sensorelement ein kapazitives, flächiges dielektrisches Elastomersensorelement, das als flächiges dielektrisches Folienelement ausgebildet ist, bei dem auf gegenüberliegenden Seiten einer elektrisch nicht leitfähigen Kunststofffolie jeweils eine elektrisch leitfähige Schicht aufgebracht ist, wobei jede der beiden elektrisch leitfähigen Schichten eine flächige Elektrode bildet.

Die Erfinder haben erkannt, dass ein kapazitives, flächiges dielektrisches Elastomersensorelement vorteilhaft eine besonders hohe Messgenauigkeit aufweist und außerdem leicht herzustellen ist, indem eine Kunststofffolie beidseitig mit einer Elektrode beschichtet wird.

Weiter vorteilhaft ist ein solches dielektrisches Elastomersensorelement ein dehnbares Sensorelement, wobei dehnbar bedeutet, dass das Sensorelement zur Erzeugung eines Messsignals um bis zu 100 % in einer Längenrichtung verlängerbar ist. Eine Längenrichtung ist eine Richtung, die senkrecht zu einer Dickenrichtung des Sensorelements ist.

Besonders vorteilhaft ist zur Erzeugung eines Messsignals eine Dehnung, das heißt eine Veränderung einer Länge in einer Längenrichtung, zwischen 1 % und 30 %.

In einer Ausgestaltung der Erfindung ist das flächige Sensorelement ein kapazitives, flächiges dielektrisches Elastomersensorelement, vorzugsweise mehrlagig ausgebildet, insbesondere zweilagig, dreilagig oder fünflagig, wobei eine Anzahl an Lagen einer Anzahl an flächigen Elektroden des flächigen dielektrischen Elastomersensorelements entspricht.

Eine Anzahl an Lagen entspricht einer Anzahl an Elektroden, das heißt Elektrodenlagen oder Elektrodenschichten.

Ein zweilagiges kapazitives, flächiges dielektrisches Elastomersensorelement weist zwei Elektrodenschichten auf, während ein dreilagiges kapazitives, flächiges dielektrisches Elastomersensorelement drei Elektrodenschichten aufweist, zwischen denen sich jeweils ein Dielektrikum wie ein Elastomer auf Basis von Polysiloxan befindet.

Vorzugsweise ist das Dielektrikum mit einer Elektrode zur Bildung einer Elektrodenlage beschichtet.

Bei einem dreilagigen kapazitiven, flächigen dielektrischen Elastomersensorelement ist eine mittlere Lage diejenige durch Beschichtung hergestellte Elektrodenlage, die zur Erzeugung eines für einen Belastungszustand charakteristischen Messsignals relevant ist. Dadurch, dass die mittlere Elektrodenlage von zwei weiteren benachbarten Elekrodenlagen umgeben ist, findet eine Abschirmung der mittleren Elektrodenlage beispielsweise vor Störfeldern statt, so dass eine besonders genaue Messung möglich ist.

Bei einem fünflagigen kapazitiven, dielektrischen Elastomersensorelement können drei Elektrodenlagen zur Bestimmung einer Kraft oder eines Drehmoments herangezogen werden, während zwei Elektrodenlagen zur Abschirmung dieser Messelektrodenlagen vorgesehen sind. Vorteilhaft ist eine ganz besonders genaue Bestimmung möglich.

Denkbar ist, dass mehr als fünf Lagen vorgesehen sind, beispielsweise bis zu 20 Lagen, wobei die Erfinder festgestellt haben, dass ein fünflagiges Sensorelement bereits eine hinreichende Abschirmung und Messgenauigkeit ermöglicht.

Insbesondere kann sich eine Elektrodenlage von einer Seite des kapazitiven, flächigen dielektrischen Elastomersensorelements zu einer gegenüberliegenden Seite erstrecken. Es versteht sich, dass Aussparungsbereiche, das heißt Bereiche, in denen die Elektrodelage unterbrochen ist, denkbar sind. Eine ringfömige Elektrodenlage würde sich über eine gesamte Fläche eines flächigen Sensorelements erstrecken, hätte in der Mitte jedoch einen Aussparungsbereich, in der sich kein Elektrodenmaterial, das heißt Beschichtungsmaterial befindet. Zur elektrischen Kontaktierung der Elektrodenlagen, durch die eine Verbindung zu einer Messsignalauswerteinrichtung geschaffen ist, weist das dielektrische Elastomersensorelement Kontaktbereiche auf, in denen sich nur eine Elektrodelage oder gleichpolige Elektrodenlagen erstrecken.

In einer Ausgestaltung der Erfindung weist eine Elektrodenlage eines mehrlagigen flächigen Sensorelements, das als mehrlagiges flächiges dielektrisches Elastomersensorelement ausgebildet ist, mehrere benachbarte Erfassungsbereiche auf.

Dadurch, dass mehrere Erfassungsbereich vorgesehen sind, können mit einem einzigen Sensorelement Kräfte und Drehmomente bestimmt werden.

Vorteilhaft kann mit einem einzigen Sensor ein mehrachsiger Belastungszustand erfasst werden. Insbesondere wird dies durch die mehreren Erfassungsbereiche und deren Verschiebung bei Belastung zueinander ermöglicht. Je mehr Erfassungsbereiche vorgesehen sind, desto genauer können Kräfte und Drehmomente bestimmt werden.

Als besonders vorteilhaft hat sich herausgestellt, wenn zwei bis zehn Erfassungsbereiche vorgesehen sind, vorzugsweise drei bis sechs. Mit drei bis sechs Erfassungsbereichen ist eine überraschend genaue Messung bei gleichzeitig einfacher Messsignalauswertung möglich.

Insbesondere für eine Verwendung eines erfindungsgemäßen Sensors in einem bewegbaren Steuerhebel wie einem Joystick sind mehrere Erfassungsbereiche vorteilhaft, da eine räumliche Position des Steuerhebels beziehungsweise auf den Steuerhebel bei dessen Benutzung wirkende Kräfte und Drehmomente durch eine Messsignalauswerteinrichtung ermittelbar sind. Vorteilhaft kann ein erfindungsgemäßer Sensor als Signalgeber in einem Steuerhebel wie einem Joystick verwendet werden.

Die Erfassungsbereiche können einen in einer Umfangsrichtung bereichsweise unterbrochenen Ring bilden, wobei jeder Erfassungsbereich einen Ringabschnitt bildet.

Insbesondere können die Ringabschnitte gleich groß sein. Eine geometrisch identische Ausbildung der Ringabschnitte ist denkbar.

Denkbar ist außerdem, dass das Sensorelement drei, vier oder sechs Ringabschnitte aufweist.

Ein drei Ringabschnitte aufweisendes Sensorelement ist zur Bestimmung einer Normalkraft F_{z}, die in Richtung einer Normalen auf eine Sensorelementfläche wirkt, sowie zwei Drehmomenten Mₓ und M_{y} besonders geeignet, während ein sechs Ringabschnitte aufweisendes Sensorelement zur Bestimmung von drei Kräften Fₓ, F_{y} und F_{z} sowie drei Drehmomenten Mₓ, M_{y} und M_{z} bestimmbar, wobei sich die Indizes x, y, z auf kartesische Koordinaten beziehen.

Denkbar ist, dass mehrere Erfassungsbereich vorgesehen sind, wobei jeder Erfassungsbereich als Kreissektor mit einem Mittelpunktswinkel zwischen 30 und 180 Grad, vorzugsweise 120 Grad, ausgebildet ist.

Insbesondere können die Kreissektoren gleich groß sein. Eine geometrisch identische Ausbildung der Kreissektoren ist denkbar.

Beträgt der Mittelpunktswinkel 120 Grad, sind drei gleich große Erfassungsbereiche vorgesehen. Besonders zuverlässig bestimmbar sind eine Normalkraft, die in Richtung einer Normalen auf eine Sensorelementfläche wirkt, sowie auf den jeweiligen Erfassungsbereich wirkende Drehmomente. Dies ist insbesondere für eine Verwendung eines erfindungsgemäßen Sensors in einem bewegbaren Steuerhebel wie einem Joystick vorteilhaft.

Zweckmäßigerweise ist das flächige Sensorelement auf gegenüberliegenden Seitenflächen stoffschlüssig mit dem verformbaren Gehäuse verbunden.

Vorteilhaft ist ein Erfassungsbereich besonders genau einstellbar.

Vorzugsweise ist die stoffschlüssige Verbindung vollflächig. Durch eine vollflächige Verbindung wird sichergestellt, dass ein auf das verformbare Gehäuse wirkender Belastungszustand präzise von dem flächigen Sensorelemente erfasst werden kann, das heißt der Belastungszustand über das Gehäuse auf das flächige Sensorelement übertragen werden kann.

In einer Ausgestaltung der Erfindung ist das flächige Sensorelement in einer Dickenrichtung mittig in dem verformbaren Gehäuse angeordnet. Mittig bedeutet in gleichem Abstand zwischen zwei Gehäuseabschnitten, die sich auf gegenüberliegenden Seitenflächen des flächigen Sensorelementes befinden.

Die Dickenrichtung ist diejenige Richtung, die parallel zu einer Normalen einer Ebene ist, in der sich das flächige Sensorelement erstreckt.

Vorteilhaft ist ein Erfassungsbereich besonders genau einstellbar. Verfälschungen aufgrund einer Gehäusegeometrie werden weiter vorteilhaft verhindert.

Zweckmäßigerweise erstreckt sich das flächige Sensorelement oder sämtliche Erfassungsbereiche des flächigen Sensorelements erstrecken sich in dem verformbaren Gehäuse in einer Ebene, die parallel zu einer Sensoroberfläche ist.

Es wird sichergestellt, dass eine flächige Auslenkung des flächigen Sensorelementes, das vorzugsweise ein dielektrisches Elastomersensorelement ist, erfolgt. Vorteilhaft wird ein präziser Sensor geschaffen.

In einer weiteren Ausgestaltung der Erfindung weist das verformbare Gehäuse mindestens zwei Gehäusebereiche auf, von denen ein erster Gehäusebereich gegenüberliegende Seitenflächen des flächigen Sensorelements umgibt und ein zweiter, hülsenartiger Gehäusebereich das flächige Sensorelement und den ersten Gehäusebereich in einer Umfangsrichtung umschließt, wobei der zweite, hülsenartige Gehäusebereich als Versteifungselement wirkt, das in Bezug auf seine Festigkeit derart ausgebildet ist, dass ein Erfassungsbereich des Sensors maßschneiderbar ist.

Es versteht sich, dass jeder Gehäusebereich des verformbaren Gehäuses für sich genommen verformbar sein kann.

Der erste Gehäusebereich kann das flächige Sensorelement von zwei Seiten bedecken und somit beispielsweise vor Beschädigung schützen.

Der zweite, hülsenartige Gehäusebereich umschließt das Sensorelement in Umfangsrichtung und wirkt als Versteifungselement, durch das ein Erfassungsbereich eines erfindungsgemäßen Sensors maßschneiderbar ist.

Vorzugsweise ist der hülsenartige Gehäusebereich hohlzylindrisch ausgebildet. Eine Längsachse des hülsenartigen Gehäusebereichs kann koaxial zu einer Richtungskomponente einer Wirkrichtung einer auf einen erfindungsgemäßen Sensor wirkenden Kraft sein.

Durch geeignete Wahl eines Materials, aus dem der hülsenartige Gehäusebereich gebildet ist, sind eine Empfindlichkeit und ein Erfassungsbereich eines erfindungsgemäßen Sensors einstellbar. Der hülsenartige Gehäusebereich kann ein besonders wirksames Versteifungselement bilden.

Ist dieser beispielsweise aus Stahl gebildet, kann ein erfindungsgemäßer Sensor einen Erfassungsbereich aufweisen, der mehrere Tonnen beträgt, während ein aus einem Elastomer gebildeter hülsenartiger Gehäusebereich eine Kraftmessung im Millinewtonbereich ermöglicht.

Es versteht sich, dass eine hohlzylindrische Ausbildung des hülsenartigen Gehäusebereichs nicht auf eine Kreiszylinderform beschränkt ist. Andere Grundflächen sind denkbar, beispielsweise eine mehreckige oder eine ovale Zylindergrundfläche.

Zweckmäßigerweise sind die beiden Gehäusebereiche des verformbaren Gehäuses aus voneinander verschiedenen Materialien oder aus einem gleichen Material gebildet.

Dazu kann ein zweiter, hülsenartiger Gehäusebereich aus einem Material gebildet, das einen höheren Elastizitätsmodul aufweist als ein erster Gehäusebereich.

Denkbar sind Anwendungen, bei denen der erste Gehäusebereich aus einem Kunststoff auf Silikonbasis gebildet ist, während der zweite, hülsenartige Gehäusebereich aus einem Metall, beispielsweise einem Leichtmetall oder einer Leichtmetalllegierung, gebildet ist.

Es wird ein Sensor geschaffen, der trotz eines flächigen, vorzugsweise dielektrischen Elastomersensorelement, eine große Kraft oder ein hohes Drehmoment messen kann. Vorteilhaft wirkt der hülsenartige Gehäusebereich in der Art eines Absorbers, der eine auf das Sensorelement wirkende Kraft oder ein auf das Sensorelement wirkendes Drehmoment erheblich verringert.

Beispielsweise kann der Elastizitätsmodul des flächigen Sensorelements zwischen 0,40 MPa und 0,65 MPa betragen, während der Elastizitätsmodul des verformbaren Gehäuses oder eines der Gehäusebereiche bei Verwendung eines Elastomers zwischen 0,50 MPa und 30,00 MPa beträgt.

Der Elastizitätsmodul des flächigen Sensorelements entspricht bei einem dielektrischen Elastomersensorelement einem Elastizitätsmodul eines zwischen Elektroden angeordneten Dielektrikums.

Bei Verwendung eines erfindungsgemäßen Sensors in der Robotik ist das Gehäuse aus vorzugsweise aus einem Kunststoff auf Silikonbasis gebildet bzw. die die beiden Gehäusebereiche sind vorzugsweise aus Kunststoffen auf Silikonbasis gebildet.

Derjenige Gehäusebereich, der eine Empfindlichkeit eines erfahrungsgemäßen Sensors maßgeblich bestimmt, ist vorzugsweise aus einen festeren Material gebildet als der andere Gehäusebereich.

Die Erfinder haben erkannt, dass bei einer Auswahl des Elastizitätsmoduls aus dem jeweils genannten Bereich eine besondere Eignung eines erfindungsgemäßen Sensors für feinfühlige Greifaufgaben in der Robotik besteht. Vorteilhaft wird ein sehr präziser Sensor geschaffen, der bei einer Kraft- oder Drehmomenteinwirkung hinreichend verformt wird, um ein Messsignal zu erzeugen. Bei weicheren Materialien wäre das Gehäuse oder der jeweilige Gehäusebereich zur weich, das heißt zu stark dämpfend, um ein verwendbares Messsignal zu erzeugen. Bei einem zu harten Gehäusebereich wäre eine Verformung des flächigen Sensorelements zu gering, um überhaupt ein Messsignal zu erzeugen.

Sind die beiden Gehäusebereiche aus einem gleichen Material gebildet, können eine Empfindlichkeit und ein Erfassungsbereich eines erfindungsgemäßen Sensors beispielsweise anhand einer Höhe des Gehäuses, das heißt dessen Abmessung in Normalenrichtung einer Normalen auf eine Sensorelementfläche, sowie einer Grundfläche des Gehäuses maßgeschneidert werden. Es wird ein einfach herzustellender Sensor geschaffen, durch den besonders genaue Messergebnisse möglich sind. Weiter vorteilhaft kann ein Herstellungsverfahren standardisiert werden, so dass mit einem einzigen Herstellungsverfahren Sensoren herstellbar sind, die verschieden empfindlich sind und verschiedene Erfassungsbereiche aufweisen. Herstellungskosten sinken dadurch erheblich.

In einer Ausgestaltung der Erfindung ist das verformbare Gehäuse einteilig oder mehrteilig ausgebildet.

Ein einteiliges Gehäuse kann einstückig an das flächige Sensorelement dieses umgebend angeformt sein, beispielsweise bei Herstellung durch Spritzguss.

Ein einteiliges, einstückiges verformbares Gehäuse kann außerdem beispielsweise zwei Gehäusebereiche aufweisen, die voneinander verschiedene mechanische Eigenschaften aufweisen. Beispielsweise kann ein erster Gehäusebereich gegenüberliegende Seitenflächen des flächigen Sensorelements umgeben, während ein zweiter, hülsenartiger Gehäusebereich das flächige Sensorelement in einer Umfangsrichtung umschließt. Ein solches einteiliges Gehäuse ist besonders kostengünstig herstellbar, beispielsweise durch ein Spritzgießverfahren, bei dem zwei unterschiedliche Kunststoffe zur Bildung der Gehäusebereiche an das flächige Sensorelement angespritzt werden.

Ein mehrteiliges verformbares Gehäuse kann beispielsweise zwei Gehäusebereiche umfassen, die voneinander verschiedene Eigenschaften oder voneinander verschiedene geometrische Ausbildungen aufweisen.

Beispielsweise kann ein erster Gehäusebereich gegenüberliegende Seitenflächen des flächigen Sensorelements umgeben. Ein zweiter Gehäusebereich kann als Rückstellmittel, das eine Schraubenfeder umfasst, ausgebildet sein, wobei Das Rückstellmittel ein flächiges Sensorelement und gegebenenfalls den ersten Gehäusebereich in einer Umfangsrichtung umschließt.

Vorteilhaft kann der erste Gehäusebereich Schutz vor Verschmutzung bieten, während durch den zweiten Gehäusebereich eine Empfindlichkeit und ein Messbereich einstellbar sind.

Es versteht sich, dass der zweite, als Rückstellmittel vorgesehene Gehäusebereich austauschbar ausgebildet sein kann. Vorteilhaft wird ein für verschiedene Erfassungsbereiche geeigneter Sensor geschaffen.

Zweckmäßigerweise weist der Sensor einen Ringspalt auf, der zwischen zwei Gehäusebereichen des Gehäuses ausgebildet ist, und in den hinein sich das flächige Sensorelement oder/und ein Gehäusebereich eines verformbaren, mehrteiligen Gehäuses bei bestimmungsgemäßer Verwendung des Sensors hinein erstrecken kann.

Es wird ein Raum geschaffen, in den sich das flächige Sensorelement oder/und ein Gehäusebereich des verformbaren Gehäuses bei bestimmungsgemäßer Verwendung des Sensors hinein erstrecken kann. Eine präzise Messung ist weiterhin möglich, selbst wenn ein vorgesehener Erfassungsbereich überschritten wird. Vorteilhaft wird eine Beschädigung des Sensors bei Überschreiten eines vorgesehenen Erfassungsbereichs verhindert.

In einer Ausgestaltung der Erfindung ist ein Kontaktbereich, in dem das flächige Sensorelement elektrisch mit einer Messsignalverarbeitungseinrichtung verbunden ist, außerhalb des verformbaren Gehäuses angeordnet.

Beispielsweise kann das flächige Sensorelement einen Bereich aufweisen, der aus dem Gehäuse herausgeführt ist. Der Kontaktbereich befindet sich außerhalb des Gehäuses oder außerhalb von Gehäusebereichen, so dass dieser mechanisch nicht belastet wird. Vorteilhaft wird ein besonders lang haltbarer Sensor geschaffen. Die Erfinder haben erkannt, dass eine mechanische Belastung von elektrischen Kontakten eine Lebensdauer eines Sensors besonders stark herabsetzt.

In einer weiteren Ausgestaltung der Erfindung weist der Sensor ein Versteifungsmittel auf, das zwei Platten umfasst, die vorzugsweise auf gegenüberliegenden Seiten des flächigen Sensorelementes angeordnet sind.

Eine Bestimmung einer Kraft oder eines Drehmoments ist durch Bestimmung einer Verschiebung der beiden Platten relativ zueinander besonders genau möglich. Vorteilhaft wird eine Kalibrierung des Sensors vereinfacht.

Zweckmäßigerweise ist das Versteifungsmittel stoffschlüssig mit dem verformbaren Gehäuse verbunden.

Vorteilhaft wird ein Sensor geschaffen, mit dem neben Druckkräften auch Zugkräfte bestimmbar sind. Insbesondere wenn das Gehäuse aus einem viskoelastischen Kunststoff gebildet ist oder wenn das flächige Sensorelement ein dielektrisches Elastomersensorelement ist, ist dies vorteilhaft. Bisher waren mit einem Sensor, der ein dielektrisches Sensorelement aufweist, nur Druckkräfte messbar, da für Zugkräfte kein hinreichend fester Kraftangriffspunkt vorhanden war. Drehmomente waren bisher mit einem solchen Sensor überhaupt nicht messbar.

In einer Ausgestaltung der Erfindung entspricht ein Abstand gegenüberliegender Gehäuseseiten des verformbaren Gehäuses zwischen einem Dreifachen und einem Einhundertfachen einer Dicke des flächigen Sensorelements.

Der Abstand gegenüberliegender Gehäuseseiten des verformbaren Gehäuses entspricht einer Gehäusedicke.

Die Erfinder haben festgestellt, dass bei den genannten geometrischen Verhältnissen eine symmetrisch konvexe Verformung des verformbaren Gehäuses, das heißt eine Ausbauchung, bei bestimmungsgemäßer Verwendung eines erfindungsgemäßen Sensors auftritt. Durch diese Ausbauchung ist eine besonders hohe Flächendehnung des Sensorelements möglich, wodurch eine Sensitivität des Sensor zunimmt. Vorteilhaft kann ein qualitativ besonders gutes Messsignal erzeugt werden.

Die Erfinder haben außerdem erkannt, dass keine weitere Messsignalverbesserung ab dem Einhundertfachen auftritt.

Bei sehr kleinen Gehäusedicken, das heißt einem Abstand gegenüberliegender Gehäuseseiten des verformbaren Gehäuses von weniger als dem Dreifachen der Dicke des flächigen Sensorelements ist eine die Sensitivität bestimmende Flächendehnung nur sehr gering. Eine hinreichend große Flächendehnung ist insbesondere bei kapazitiven, flächigen Sensorelementen von Bedeutung, da eine hohe Flächendehnung mit einer hohen Sensitivität einhergeht.

Die Erfinder haben außerdem festgestellt dass bei Dicken des Sensorelements bis 1,00 mm eine Gehäusedicke bis zum Zehnfachen der Dicke des Sensorelementes vorteilhaft ist, während bei Sensoren mit einer Dicke des Sensorelements zwischen 50,0 µm und 500,0 µm eine Gehäusedicke bis zum Einhundertfachen einer Dicke des Sensorelements vorteilhaft ist. Je größer eine Gehäusedicke, desto größer sind bei Verformung, das heißt bei bestimmungsgemäßer Benutzung, auftretende Spannungen in dem Gehäuse, die zu einer verringerten Lebensdauer des Sensors führen. Als Grenzwert, unterhalb dessen eine optimale Sensitivität bei gleichzeitig langer Lebensdauer auftritt, haben die Erfinder das vorgenannte Einhundertfache ermittelt.

In einer weiteren Ausgestaltung der Erfindung ist das Gehäuse mehrteilig und vorzugsweise rotationssymmetrisch, und weist einen in radialer Richtung inneren und äußeren Gehäusebereich auf, wobei sich der äußere Gehäusebereich von einer ersten Gehäuseseite zu einer gegenüberliegenden Gehäuseseite erstreckt.

Der äußere Gehäusebereich ist vorzugsweise hohl in der Art eines Hohlzylinders ausgebildet und umgibt den inneren Gehäusebereich in einer Umfangsrichtung vollständig. Der äußere Gehäusebereich erstreckt sich außerdem vorzugsweise parallel oder koaxial zu einer Wirkrichtung einer auf den Sensor wirkenden, zu bestimmenden Kraft.

Dadurch, dass sich der äußere Gehäusebereich von einer ersten Gehäuseseite zu einer gegenüberliegenden Gehäuseseite erstreckt, sind die beiden Gehäusebereiche bündig.

Das flächige Sensorelement ist vorzugsweise in den inneren Gehäusebereich eingebracht. Es ist besonders vorteilhaft, wenn die beiden Gehäusebereiche aus voneinander verschiedenen Materialien gebildet sind, wobei dasjenige, aus dem der innere Gehäusebereich gebildet ist, eine geringere Festigkeit als dasjenige Material aufweist, aus dem der äußere Gehäusebereich gebildet ist. Beispielsweise kann der innere Gehäusebereich aus einem Kunststoff gebildet sein, während der äußere Gehäusebereich aus einem metallischen Werkstoff, der eine Eisen- oder Leichtmetalllegierung umfassen kann, gebildet ist.

Vorteilhaft wird ein Sensor geschaffen, mit dem auch besonders große Kräfte messbar sind. Es versteht sich, dass der äußere Gehäusebereich und der innere Gehäusebereich kraft- und/oder stoffschlüssig miteinander verbunden sein können, oder lösbar miteinander verbunden sein können. Denkbar ist, dass der äußere Gehäusebereich austauschbar ist und den inneren Gehäusebereich in der Art einer Hülse umgibt.

Vorteilhaft wird ein Sensor geschaffen, der einen besonders breiten Messbereich aufweist und für eine breites Anwendungsfeld geeignet ist.

In einer Ausgestaltung der Erfindung ist das Gehäuse aus einem Elastomer oder einem metallischen Werkstoff gebildet ist.

Diese beiden Materialien haben sich zur Schaffung eines Sensors mit einem breiten Anwendungsfeld als besonders vorteilhaft herausgestellt.

Ein metallischer Werkstoff kann Stahl sein oder eine Leichtmetalllegierung beispielsweise auf Basis von Aluminium oder Magnesium.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: mehrere Ausführungsformen eines erfindungsgemäßen Sensors sowie Details,
- Fig. 2: eine Ausführungsform eines erfindungsgemäßen Sensors,
- Fig. 3: eine weitere Ausführungsform eines erfindungsgemäßen Sensors,
- Fig. 4: eine Ausführungsformen eines erfindungsgemäßen Sensors.

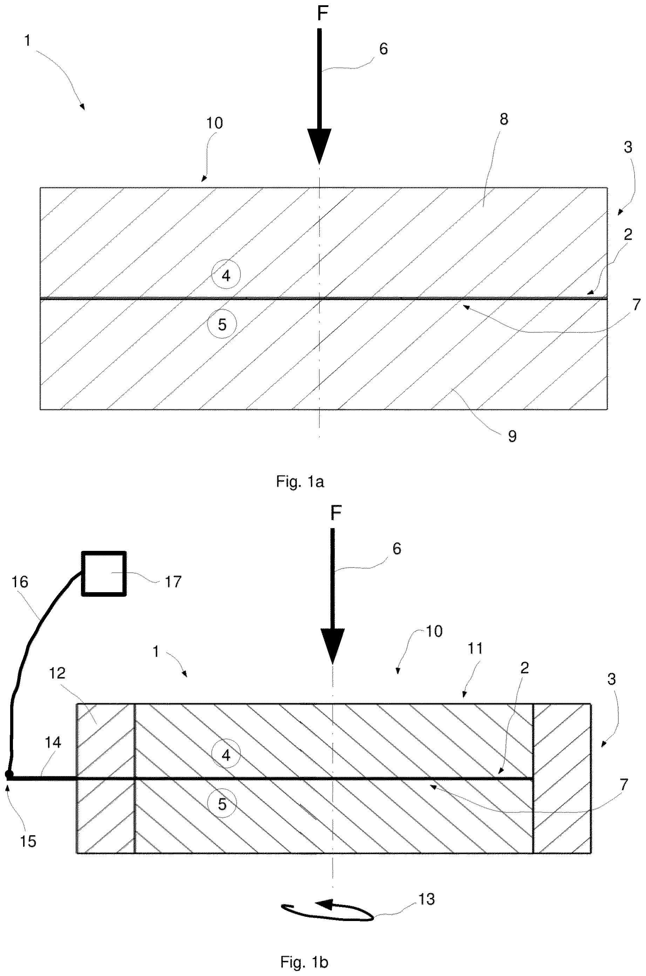

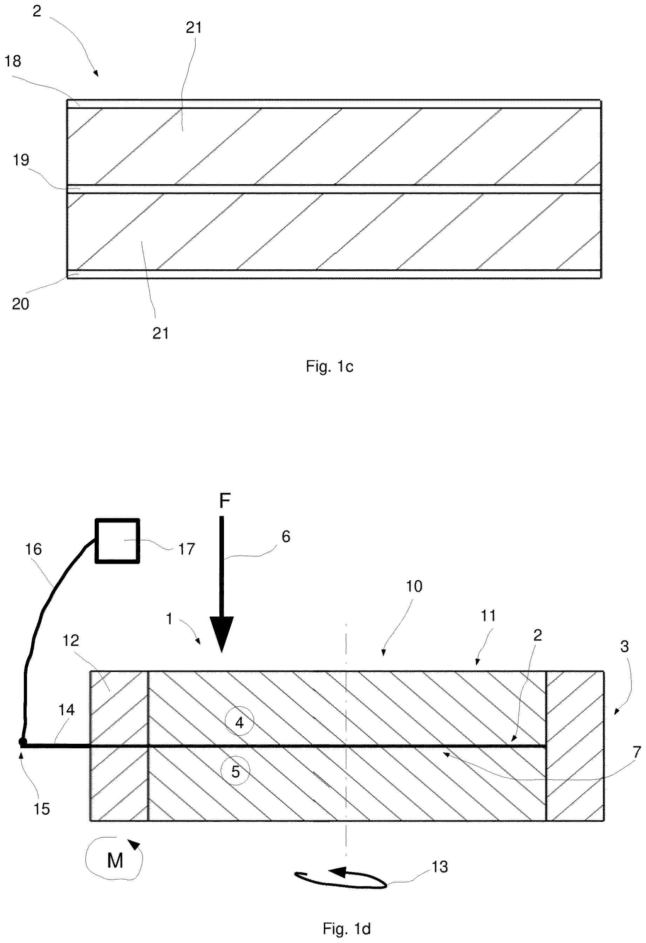

Ein in Fig. 1a in geschnittener Seitenansicht schematisch gezeigter, kreiszylindrischer Sensor 1 ist als Kraftsensor ausgebildet und umfasst ein mehrlagiges, kapazitives, flächiges dielektrisches Elastomersensorelement 2, das in Fig. 1c im Detail gezeigt ist, und ein einteiliges, aus Silikonkautschuk gebildetes Gehäuse 3, das auf gegenüberliegenden Seitenflächen 4, 5 des dielektrisches Elastomersensorelement 2 stoffschlüssig mit diesem verbunden ist.

Eine schematisch gezeigte Kraft F wirkt bei bestimmungsgemäßer Verwendung des Kraftsensors 1 in einer Wirkrichtung (Pfeil 6), die parallel zu einer Normalen einer Ebene 7 ist, in der sich das kapazitive, flächige dielektrische Elastomersensorelement 2 erstreckt.

Das dielektrische Elastomersensorelement 2 ist in einer Kraftwirkungsrichtung der Kraft F (Pfeil 6) in einer Dickenrichtung mittig zwischen einem oberen Gehäuseabschnitt 8 und einem unteren Gehäuseabschnitt 9 des Gehäuses 3 angeordnet.

Die Kraft F wirkt vollflächig auf den Kraftsensor 1, das heißt auf eine dem Pfeil 6 zugewandte Sensoroberfläche 10.

Aus Gründen der Übersichtlichkeit ist eine Gegenkraft zur Kraft F in keiner der Figuren gezeigt.

Ein in Fig. 1b in geschnittener Seitenansicht schematisch gezeigter kreiszylindrischer Sensor 1 ist als Kraftsensor ausgebildet und unterscheidet sich von demjenigen in Fig. 1a gezeigten dadurch, dass ein einstückiges Gehäuse 3 zwei Gehäusebereiche 11, 12 aufweist, von denen ein erster, innerer Gehäusebereich 11 gegenüberliegende Seitenflächen 4, 5 eines kapazitiven, flächigen dielektrischen Elastomersensorelements 2 umgibt, während ein zweiter, äu-βerer Gehäusebereich 12 hülsenartig ausgebildet ist und das dielektrische Elastomersensorelement 2 und den inneren Gehäusebereich 11 in einer Umfangsrichtung 13 vollständig umschließt.

Der innere Gehäusebereich 11 ist aus einem Silikonkautschuk mit einem Elastizitätsmodul von 1 MPa gebildet, während der äußere Gehäusebereich 12 aus einem Silikonkautschuk mit einem Elastizitätsmodul von 25 MPa besteht.

Die beiden Gehäusebereiche 11, 12 sind an das kapazitive, flächige dielektrische Elastomersensorelement 2 in einem einzigen Verfahrensschritt angespritzt.

Die beiden Gehäusebereiche 11, 12 sind an gegenüberliegenden Seiten außerdem bündig, das heißt der äußere Gehäusebereich 12 erstreckt sich von einer ersten Gehäuseseite zu einer gegenüberliegenden Gehäuseseite des Gehäuses 3 in einer Wirkrichtung (Pfeil 6) der Kraft F.

Eine Lasche 14, die einen Kontaktbereich 15 aufweist, in dem eine Signalleitung 16 zur Verbindung des Kraftsensors 1 mit einer Messsignalauswerteinrichtung 17 mit dem dielektrischen Elastomersensorelement 2 verbunden ist, ist außerhalb des Gehäuses 2 angeordnet ist. Die Lasche 14 ist durch den Gehäusebereich 12 hindurchgeführt.

Denkbar ist, dass das in Fig. 1b gezeigte Gehäuse 3 mehrteilig ausbildet ist, wobei ein erster Teil von dem ersten, inneren Gehäusebereich 11 gebildet wird und ein zweiter Teil von einem zweiten, äußeren Gehäusebereich 12, der eine Aluminiumhülse sein kann. Zwischen den beiden Gehäusebereichen 11, 12 kann ein in Fig. 1b nicht gezeigter Ringspalt vorgesehen sein.

Es versteht sich, dass im Fall eines Ringspalts zwischen dem inneren Gehäusebereich 11 und dem äußeren Gehäusebereich 12 sichergestellt sein muss, dass eine Kraft F vollflächig über beide Gehäusebereiche 11, 12 des Gehäuses 3 wirkt.

Es versteht sich außerdem, dass der zweite, äußere Gehäusebereich 12 eine Stahlhülse oder eine aus einem anderen Metall gebildete Hülse umfassen kann.

Es ist ferner denkbar, dass der zweite, äußere Gehäusebereich 12 von einem in Fig. 1b nicht gezeigten Rückstellmittel, das eine Schraubenfeder umfassen kann, gebildet ist, wobei das Rückstellmittel den ersten, inneren Gehäusebereich 11 in einer Umfangsrichtung zumindest abschnittsweise hülsenartig umgibt.

Ein in Fig. 1c in geschnittener Seitenansicht im Detail schematisch gezeigtes kapazitives, flächiges dielektrisches Elastomersensorelement 2 ist dreilagig ausgebildet und umfasst drei Elektrodenschichten 18, 19, 20 sowie dazwischen angeordnete dielektrische Elastomerfolien 21, die aus einem Kunststoff auf Silikonbasis bestehen. Die Elektrodenschichten 18-20 sind auf die Elastomerfolien 21 aufgebracht und bilden jeweils eine Elektrodenlage.

Die Elektrodenschichten 18 und 20 sind sogenannte Masseelektroden, die die Elektrodenschicht 19, die eine Messelektrode bildet, abschirmen und somit vor Störsignalen schützt. Durch diesen mehrlagigen Aufbau wird vorteilhaft eine besonders genaue Messung möglich.

Ein in Fig. 1d in geschnittener Seitenansicht schematisch gezeigter kreiszylindrischer Sensor 1 ist als Kraftsensor und Drehmomentsensor ausgebildet, das heißt zur gleichzeitigen Messung einer Kraft F und eines Drehmoments M geeignet, und unterscheidet sich von denjenigen in Fig. 1a und Fig. 1b gezeigten Sensoren dadurch, dass der in Fig. 1d gezeigte Sensor 1 ein kapazitives, flächiges dielektrisches Elastomersensorelement aufweist, das mehrere Erfassungsbereiche 21 aufweist.

Durch die außermittig an den Sensor 1 angreifende Kraft F wird ein Drehmoment M erzeugt, wobei die Kraft F und das Drehmoment M eine für einen in Fig. 1d gezeigten Belastungszustand charakteristisches Messsignal erzeugen, aus dem die Kraft und das Drehmoment bestimmt werden können.

In Fig. 1d sind aus Gründen der Übersichtlichkeit und Vereinfachung nur eine einzige Kraft F und ein einziges Drehmoment M gezeigt.

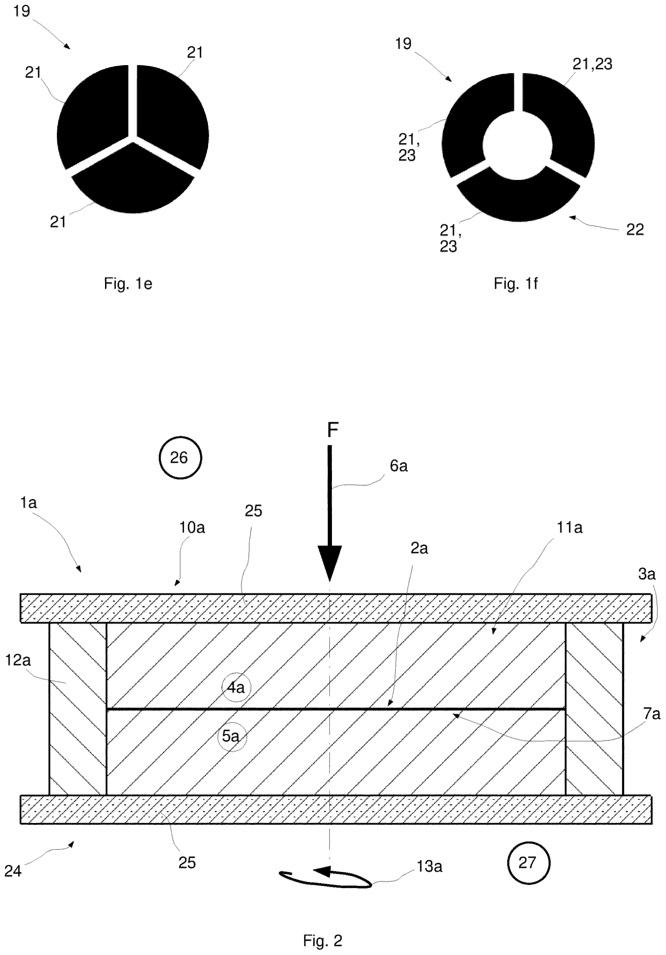

Eine in Fig. 1e in Draufsicht im Detail gezeigte runde Elektrodenschicht 19 des flächigen dielektrischen Elastomersensorelements umfasst drei gleich große Erfassungsbereiche 21, die jeweils kreissektorförmig ausgebildet sind und einen Mittelpunktswinkel von 120 Grad aufweisen.

Eine in Fig. 1f in Draufsicht im Detail gezeigte runde Elektrodenschicht 19 eines flächigen dielektrisches Elastomersensorelements weist drei gleich große Erfassungsbereiche 21 auf, die einen in einer Umfangsrichtung bereichsweise unterbrochenen Ring 22 bilden, wobei jeder Erfassungsbereich 21 einen Ringabschnitt 23 bildet.

Es versteht sich, dass die Elektrodenschichten 18, 20 in ihren Abmessungen genau wie die Elektrodenschicht 19 ausgebildet sein können. Insbesondere können die Elektrodenschichten 18, 20 in Draufsicht scheibenförmig oder ringförmig ausgebildet sein.

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Ein in Fig. 2 in geschnittener Seitenansicht schematisch gezeigter kreiszylindrischer Kraftsensor 1a unterscheidet sich von denjenigen in Fig. 1a und 1b gezeigten dadurch, dass der Kraftsensor 1a ein Versteifungsmittel 24 aufweist, das zwei aus einem Metall gebildete Platten 25 umfasst, die stoffschlüssig mit einem mehrteiligen Gehäuse 3a verbunden sind. Diese Metallplatten 25 sind parallel zu einer Ebene 7a, in der sich ein flächiges dielektrisches Elastomersensorelement 2a erstreckt, und auf gegenüberliegenden Seiten 26, 27 des flächigen dielektrischen Elastomersensorelements 2a angeordnet.

Es versteht sich, dass die Platten 25 aus einem anderen Material gebildet sein können, beispielsweise einem Kunststoff, insbesondere einem Duroplasten.

Zwischen zwei Gehäusebereichen 11a, 12a kann außerdem ein in Fig. 2 nicht gezeigter Ringspalt vorgesehen sein.

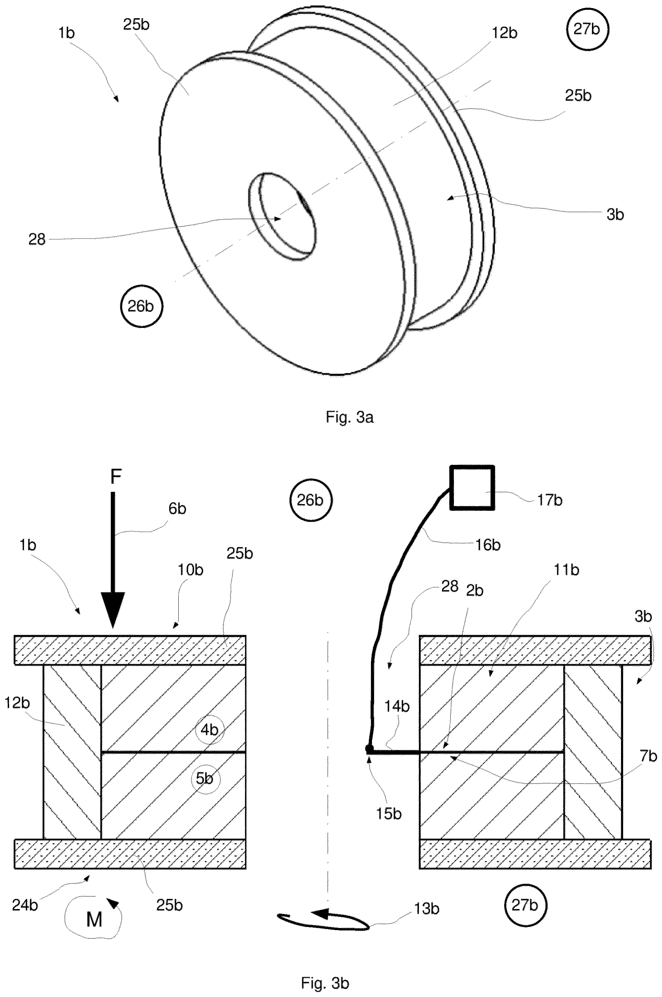

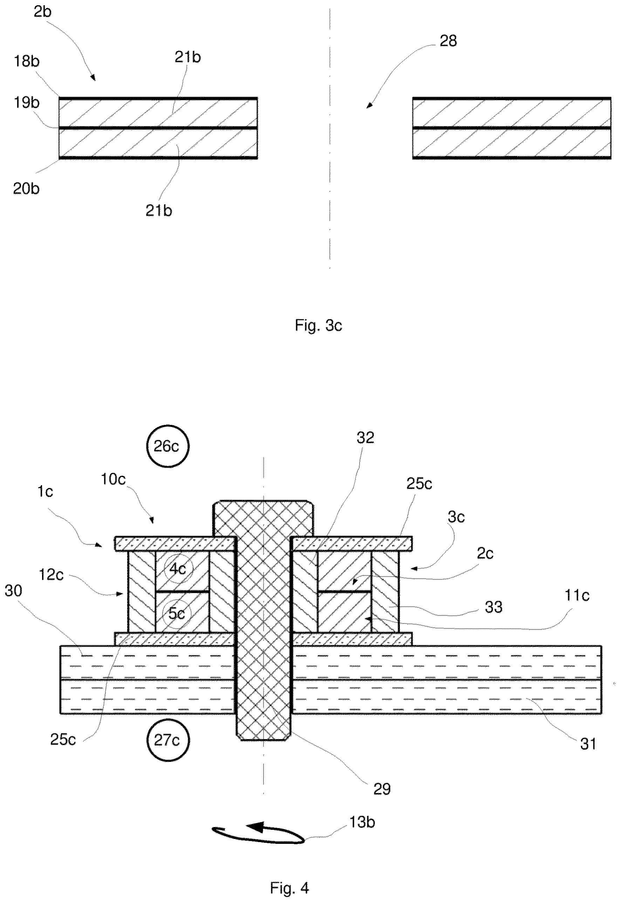

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Eine in Fig. 3a in einer perspektivischen Ansicht und in Fig. 3b in geschnittener Seitenansicht schematisch gezeigter kreiszylindrischer Sensor 1b ist als Kraftsensor und Drehmomentsensor ausgebildet und unterscheidet sich von demjenigen in Fig. 2 gezeigten dadurch, dass ein kapazitives, flächiges dielektrisches Elastomersensorelement mehrere in Fig. 1e und Fig. 1f mit Bezugszeichen 21 versehene Erfassungsbereiche aufweist, und dadurch, dass in Metallplatten 25b und einen ersten Gehäusebereich 11b eines verformbaren Gehäuses 3b Durchgangsöffnungen 28 eingebracht sind, die einen nicht mit einem Bezugszeichen versehenen Durchgangskanal bilden, der sich von einer Seiten 26b zu einer Seite 27b erstreckt.

Durch den von den Durchgangsöffnungen 28 gebildeten Durchgangskanal können elektrische Leitungen 16b, durch die eine Messsignalauswerteinrichtung 17b mit Elektrodenschichten 18b-20b eines dreilagigen dielektrischen Elastomersensorelements 2b des Sensors 1b, das in Fig. 3c im Detail in geschnittener Seitenansicht gezeigt ist, verbunden sind, aus dem verformbaren Gehäuse 3b heraus geführt werden. In diesem Ausführungsbeispiel ist sind die Elektroden 18b und 20b ringförmig ausgebildet.

Es wird nun auf Fig. 4 Bezug genommen, wo gleiche oder gleichwirkende Teile mit derselben Bezugszahl wie in Fig. 1 bis 3 bezeichnet sind und der betreffenden Bezugszahl jeweils der Buchstabe c beigefügt ist.

Ein in Fig. 4 in geschnittener Seitenansicht gezeigter Sensor 1c ist zur Bestimmung eines Anziehmoments und einer Klemmkraft einer Schraube 29, die zwei Werkstücke 30, 31 miteinander verbindet, eingerichtet, und unterscheidet sich von denjenigen in Fig. 1 bis 3 gezeigten Sensoren dadurch, dass ein zweiter Gehäusebereich 12c eines mehrteiligen verformbaren Gehäuses 3b mehrteilig ausgebildet ist und zwei konzentrische Hülsen 32, 33 umfasst, wobei die Schraube 29 durch eine erste Hülse 32 hindurchgeführt ist.

In Fig. 4 nicht gezeigte Elektrodenschichten eines kapazitiven, dielektrischen Elastomerelements 2c sind in diesem Ausführungsbeispiel ringförmig ausgebildet und erstrecken sich von einer Innenseite der zweiten Hülse 33 zu einer Außenseite der ersten Hülse 32.

Es versteht sich, dass sämtliche mögliche Kombinationen von Merkmalen der in Fig. 1 bis 4 gezeigten Merkmale denkbar sind. Beispielsweise kann ein in Fig. 1a gezeigter Sensor 1 eine Elektrodenschicht 19b gemäß Fig. 3c aufweisen oder eine Elektrodenschicht 19c gemäß Fig. 4.

## Patentansprüche

1. Sensor (1-1c), insbesondere Kraftsensor oder/und Drehmomentsensor, der ein in seinen Abmessungen durch eine auf den Sensor wirkende Kraft (F) oder/und ein auf den Sensor wirkendes Drehmoment (M) veränderbares, flächiges Sensorelement (2-2c) aufweist,
**dadurch gekennzeichnet,**
**dass** der Sensor (1-1c) ein verformbares Gehäuse (3-3c) umfasst, in das das flächige Sensorelement (2-2c)eingebracht ist.

2. Sensor nach Anspruch 1,
**dadurch gekennzeichnet,**
**dass** das flächige Sensorelement ein kapazitives, flächiges dielektrisches Elastomersensorelement (3-3c) ist.

3. Sensor nach Anspruch 1 oder 2,
**dadurch gekennzeichnet,**
**dass** das flächige Sensorelement ein kapazitives, flächiges dielektrisches Elastomersensorelement (3-3c) ist, das als flächiges dielektrisches Folienelement ausgebildet ist, bei dem auf gegenüberliegenden Seiten einer elektrisch nicht leitfähigen Kunststofffolie jeweils eine elektrisch leitfähige Schicht aufgebracht ist, wobei jede der beiden elektrisch leitfähigen Schichten eine flächige Elektrode bildet.

4. Sensor nach einem der Ansprüche 1 bis 3,
**dadurch gekennzeichnet,**
**dass** das flächige Sensorelement (3-3c) ein kapazitives, flächiges dielektrisches Elastomersensorelement ist, das mehrere flächige Elektroden umfasst, und das mehrlagig ausgebildet ist,vorzugsweise zweilagig, dreilagig oder fünflagig, wobei eine Anzahl an Lagen einer Anzahl an flächigen Elektroden des flächigen dielektrischen Elastomersensorelements entspricht.

5. Sensor nach einem der Ansprüche 1 bis 4,
**dadurch gekennzeichnet,**
**dass** eine Elektrodenlage (19-19b) eines mehrlagigen flächigen Sensorelements (3-3c), das als mehrlagiges flächiges dielektrisches Elastomersensorelement ausgebildet ist, mehrere benachbarte Erfassungsbereiche (21) aufweist.

6. Sensor nach einem der Ansprüche 1 bis 5,
**dadurch gekennzeichnet,**
**dass** das flächige Sensorelement (2-2c) auf gegenüberliegenden Seitenflächen (4-4c; 5-5c) stoffschlüssig mit dem verformbaren Gehäuse (3-3c) verbunden ist.

7. Sensor nach einem der Ansprüche 1 bis 6,
**dadurch gekennzeichnet,**
**dass** sich das flächige Sensorelement (2-2c) oder sämtliche Erfassungsbereiche (21) des flächigen Sensorelements (2-2c) in dem verformbaren Gehäuse (3-3c) in einer Ebene (7-7c) erstreckt bzw. erstrecken, die parallel zu einer Sensoroberfläche (10-10c) ist.

8. Sensor nach einem der Ansprüche 1 bis 7,
**dadurch gekennzeichnet,**
**dass** das verformbare Gehäuse (3-3c) mindestens zwei Gehäusebereiche (11-11c; 12-12c) aufweist, von denen ein erster Gehäusebereich (11-11c) gegenüberliegende Seitenflächen (26-26c) des flächigen Sensorelements (2-2c) umgibt und ein zweiter, hülsenartiger Gehäusebereich (12-12c) das flächige Sensorelement (2-2c) und den ersten Gehäusebereich (11-11c) in einer Umfangsrichtung (13-13c) umschließt, wobei der zweite, hülsenartige Gehäusebereich (12-12c) als Versteifungselement wirkt, das in Bezug auf seine Festigkeit derart ausgebildet ist, dass ein Erfassungsbereich des Sensors maßschneiderbar ist.

9. Sensor nach Anspruch 8,
**dadurch gekennzeichnet,**
**dass** die beiden Gehäusebereiche (11-11c; 12-12c) des verformbaren Gehäuses (3-3c) aus voneinander verschiedenen Materialien oder aus einem gleichen Material gebildet sind.

10. Sensor nach einem der Ansprüche 1 bis 9,
**dadurch gekennzeichnet,**
**dass** das verformbare Gehäuse (3-3c) einteilig oder mehrteilig ausgebildet ist.

11. Sensor nach einem der Ansprüche 1 bis 10,
**dadurch gekennzeichnet,**
**dass** der Sensor einen Ringspalt aufweist, der zwischen zwei Gehäusebereichen (11-11c; 12-12c) des Gehäuses (3-3c) ausgebildet ist, und in den hinein sich das flächige Sensorelement oder/und ein Gehäusebereich eines verformbaren, mehrteiligen Gehäuses bei bestimmungsgemäßer Verwendung des Sensors hinein erstrecken kann.

12. Sensor nach einem der Ansprüche 1 bis 11,
**dadurch gekennzeichnet,**
**dass** der Sensor ein Versteifungsmittel (24) aufweist, das zwei Platten (25; 25b; 25c) umfasst, die vorzugsweise auf gegenüberliegenden Seiten (26-26c; 27-27c) des flächigen Sensorelementes (2-2c) angeordnet sind.

13. Sensor nach Anspruch 12,
**dadurch gekennzeichnet,**
**dass** das Versteifungsmittel (24) stoffschlüssig mit dem verformbaren Gehäuse (3-3c) verbunden ist.

14. Sensor nach einem der Ansprüche 1 bis 13,
**dadurch gekennzeichnet,**
**dass** ein Abstand gegenüberliegender Gehäuseseiten des verformbaren Gehäuses (3-3c) zwischen einem Dreifachen und einem Einhundertfachen einer Dicke des flächigen Sensorelements (2-2c) entspricht.

15. Sensor nach einem der Ansprüche 1 bis 14,
**dadurch gekennzeichnet,**
**dass** das Gehäuse mehrteilig und vorzugsweise rotationssymmetrisch ist, und einen in radialer Richtung inneren und äußeren Gehäusebereich aufweist, wobei sich der äußere Gehäusebereich von einer ersten Gehäuseseite zu einer gegenüberliegenden Gehäuseseite erstreckt.

16. Sensor nach einem der Ansprüche 1 bis 15,
**dadurch gekennzeichnet,**
**dass** das Gehäuse aus einem Elastomer oder einem metallischen Werkstoff gebildet ist.
